# EUROPÄISCHE PATENTSCHRIFT

(11) **EP 0 941 887 B1**
(45) Veröffentlichungstag und Bekanntmachung des Hinweises auf die Patenterteilung: **21.05.2003**
(21) Anmeldenummer: 99104425.6
(22) Anmeldetag: 05.03.1999
(51) Int. Cl.: B60K 35/00

(54) **Anzeigemodul**
Display module
Module d'affichage

(30) Priorität: 11.03.1998 DE 29804292 U
(43) Veröffentlichungstag der Anmeldung: 15.09.1999
(73) Patentinhaber: SIEMENS AKTIENGESELLSCHAFT, 80333 München (DE)
(72) Erfinder: Hautvast, Heinz-Josef Dipl.-Ing., 78086 Brigachtal (DE); Hügle, Axel Dipl.-Ing., 78120 Furtwangen (DE); Burkart, Harald Dipl.-Ing., 78054 Villingen-Schwenningen (DE)

(56) Entgegenhaltungen:
- DE-A- 3 424 239
- PATENT ABSTRACTS OF JAPAN vol. 015, no. 327 (P-1240), 20. August 1991 (1991-08-20) -& JP 03 119383 A (RINNAI CORP), 21. Mai 1991 (1991-05-21)

## Beschreibung

Die Erfindung betrifft ein Anzeigemodul mit einem Träger zur Aufnahme eines plattenförmigen Anzeigeelementes (LC-Display), mit einer Leiterplatte, auf welcher im Zusammenwirken mit dem als Reflektor ausgebildeten Träger der Hinterleuchtung des Anzeigeelementes dienende Leuchtdioden angeordnet sind, mit Mitteln zur Kontaktierung des Anzeigeelementes mit der Leiterplatte sowie mit einem den Träger, die Kontaktmittel und das Anzeigeelement umgreifenden Halter, welcher einen dem Anzeigeelement zugeordneten Fensterausschnitt aufweist und mit Mitteln zur Verbindung mit der Leiterplatte ausgestattet ist.

Bei der Ausrüstung von Fahrzeugen mit Anzeigeinstrumenten ist es naheliegend, daß abgesehen von mittels Zeiger anzeigenden Instrumenten die heute üblichen und für die verschiedensten Informationen verwendeten LC-Anzeigemodule innerhalb eines Armaturenbrettes gleich sind, was die Farbe der Hintergrundbeleuchtung anbelangt. Verständlich ist ferner, daß die Fahrzeughersteller unterschiedliche Vorstellungen bezüglich der Farbe der Hintergrundbeleuchtung ins Spiel bringen, beziehungsweise durch die Farbwahl eine Anpassung an das Interieur der Fahrzeugkabine oder lediglich eine eigenständige/eigenwillige Unterscheidung gegenüber Mitbewerbern vornehmen wollen. Das heißt, Instrumenten- und/oder Armaturenbretthersteller müssen sich solchen Kundenwünschen anpassen, was bedeutet, daß die neuerdings für die Hintergrundbeleuchtung von LC-Anzeigemodulen eingesetzten Leuchtdioden in den verschiedensten Farbvarianten vorzusehen sind.

Ein Anzeigemodul mit den Merkmalen des Oberbegriffs des 1. Anspruchs ist bekannt aus DE-A- 3424239.

In diesem Zusammenhang stellt sich das Problem, daß ein im Handel vielfarbig verfügbarer Leuchtdiodentyp einen relativ engen Lichtabstrahlkegel aufweist und somit bei geringer Bauhöhe des betreffenden Anzeigemoduls, die bei Geräten mit hoher Packungsdichte, beispielsweise bei Fahrtschreibern, unvermeidlich ist, keine gleichmäßige Hintergrundbeleuchtung ergibt, sondern trotz der üblichen Verwendung einer dem Anzeigemodul zugeordneten Diffusorfolie die Leuchtdioden als einzelne Lichtquellen von außen sichtbar sind.

Die Aufgabe der vorliegenden Erfindung bestand somit darin, unter den geschilderten Bedingungen mit möglichst geringem Aufwand eine gleichmäßige Hinterleuchtung eines Anzeigemoduls zu erzielen.

Die Lösung der Aufgabe ist dadurch gekennzeichnet, daß innerhalb des Trägers mit Abstand zu den im wesentlichen in einer Zeile angeordneten Leuchtdioden und mit Abstand zu dem Anzeigeelement ein lichtstreuender, prismatischer Körper derart angeordnet ist, daß die Firstlinie des prismatischen Körpers dem Anzeigeelement zugeordnet ist.

Weitere vorteilhafte Ausgestaltungen der Erfindung beschreiben die Unteransprüche.

Der entscheidende Vorzug, den die Erfindung bietet ist darin zu sehen, daß in einem Bauraum mit relativ geringer Höhe eine homogene, leuchtfleckfreie Hinterleuchtung des Anzeigeelementes erzielt wird, und zwar durch Einfügen eines zusätzlichen, lichtdurchlässigen und als Diffusor wirkenden Bauteils in den Reflexionsraum des Trägers des Anzeigeelementes. Dabei sind die Abmessungen des Bauteils und dessen Abstand von den Leuchtdioden so gewählt, daß durch das Bauteil gegebenenfalls verursachte Schatten außerhalb des Bereichs der Anzeigefläche des Anzeigeelementes liegen. Vorteilhaft ist ferner, daß der Diffusor spritzgießtechnisch hergestellt werden kann und daß der Träger ebenfalls spritzgießtechnisch derart gestaltet ist, daß der Diffusor mit dem Träger rastend verbindbar ist, also auf einfache Weise montiert werden kann. Für die vorteilhafte Wirkung des Diffusors entscheidend sind insbesondere das vorgesehene v- beziehungsweise Dachprofil sowie die Auswahl eines Werkstoffs mit relativ geringer Lichtdurchlässigkeit, womit gleichzeitig eine Lichtdämpfung und -verteilung erzielt wird. Durch die Wahl des Winkels unter dem die Schenkel des prismatischen Körpers zueinander stehen ist ferner eine Anpassung der Hinterleuchtung an die jeweils gegebene Geometrie der Anzeigefläche möglich.

Im folgenden sei die Erfindung anhand von Zeichnungen näher erläutert.

Es zeigen:
- Figur 1: eine Frontansicht eines Fahrtschreibers mit einem quaderförmigen Gehäuse,
- Figur 2: eine perspektivische Ansicht eines einer Leiterplatte zugeordneten Trägers einer Frontwand-Baugruppe des Fahrtschreibers, wobei die Leiterplatte und der Träger den aus der Figur 1 ersichtlichen Funktionen entsprechend ausgebildet sind,
- Figur 3: einen Schnitt der Frontwand-Baugruppe im Bereich des Anzeigemoduls.

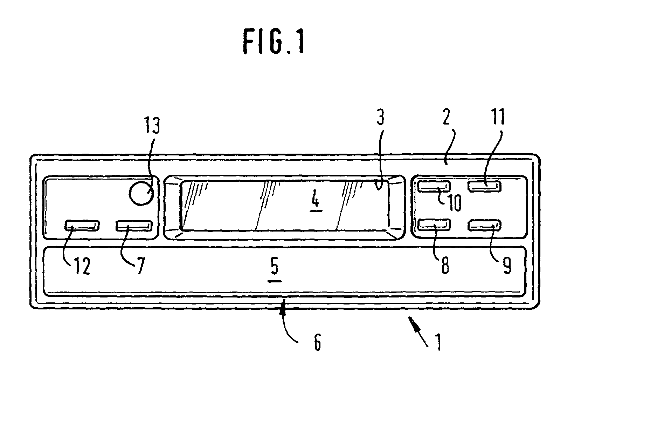

In Figur 1 ist mit 1 das quaderförmige Gehäuse des als Ausführungsbeispiel der Erfindung gewählten Fahrtschreibers bezeichnet, an dessen Frontrahmen 2, welcher eine Frontwand-Baugruppe verblendet, ein Fensterausschnitt 3 für ein dem Fahrtschreiber zugeordnetes LC-Display 4 ausgebildet ist. 5 stellt eine frontseitige Blende eines in dem Gehäuse 1 geführten Diagrammscheibenträgers 6 dar. Von in der Frontwand-Baugruppe gelagerten und durch den Frontrahmen 2 durchgreifenden Tasten 7, 8, 9, 10, 11 und 12 sind die Tasten 7 und 8 sowie die als Menütaste bezeichnete Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Entriegeln und Freigeben des Diagrammscheibenträgers 6 vorgesehen. Mittels einer mit 13 bezeichneten Plombe ist der Zugang zu einer Diagnosebuchse gesichert.

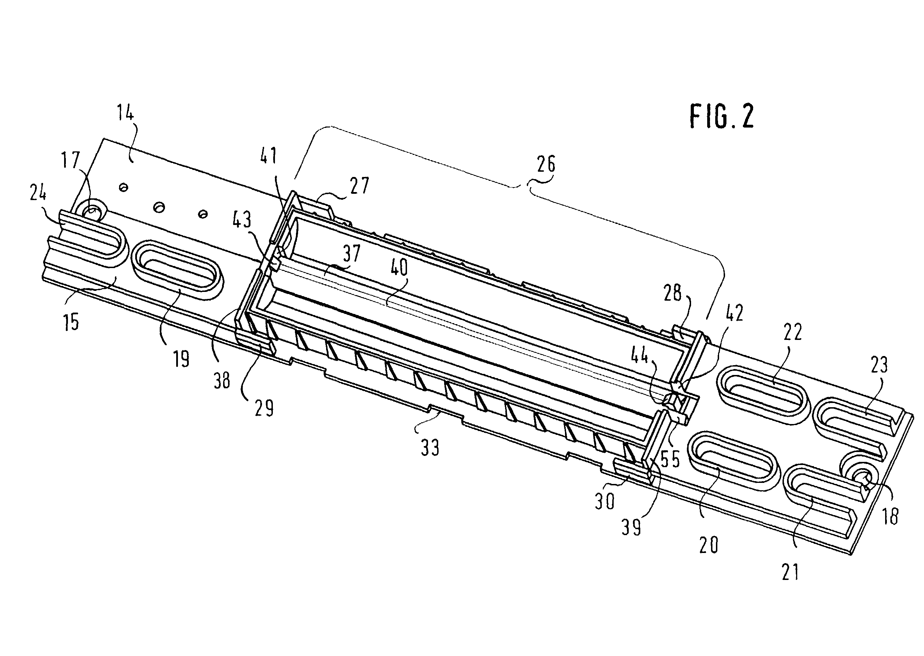

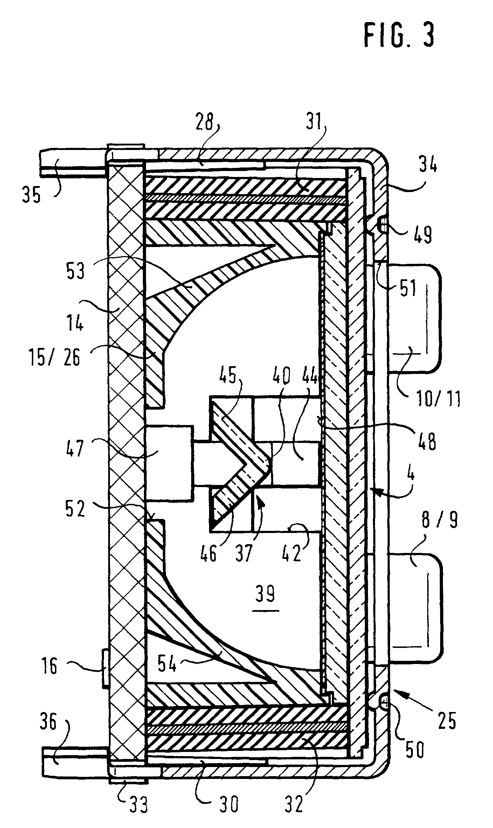

Wie aus der Figur 2 hervorgeht ist mit 14 eine Leiterplatte bezeichnet, auf welcher die Frontwand-Baugruppe aufgebaut ist. In Figur 2 ist der Leiterplatte 14 jedoch lediglich ein Träger 15 zugeordnet, der mittels angeformter Zapfen - einer ist in Figur 3 dargestellt und mit 16 bezeichnet - auf der Leiterplatte 14 ausgerichtet ist. In der Leiterplatte 14 vorgesehene Durchgangsbohrungen 17 und 18 dienen dem Festschrauben der Leiterplatte 14 und damit dem Befestigen der Frontwand-Baugruppe an geeigneten, beispielsweise an den Seitenwänden des Gehäuses ausgebildeten beziehungsweise angebrachten Befestigungslaschen.

Der Träger 15 weist den Tasten 7, 8, 9, 10, 11 und 12 zugeordnete Führungsschächte 19, 20, 21, 22, 23 und 24 auf und ist in einem mittleren Bereich für den Aufbau eines Anzeigemoduls 25 ausgeformt, insbesondere als Lichtkasten 26 ausgebildet. Weil nicht erfindungswesentlich wurde in Figur 2 auf die Darstellung der Tasten 7, 8, 9, 10, 11, 12, die als flexibles Tastenband beziehungsweise als Tastenmatte zwischen der Leiterplatte 14 und dem Träger 15 angeordnet sind, verzichtet. Seitlich am Träger 15 angeformte Wandelemente 27, 28, 29 und 30 dienen dem Haltern von Leitgummistreifen 31 und 32 (Figur 3). Mehrere Aussparungen in der Leiterplatte 14, von denen eine mit 33 bezeichnet ist, sind für eine raumsparende Verbindung der Leiterplatte 14 mit einem dem Zusammenfügen der Frontwand-Baugruppe und damit des Anzeigemoduls 25 dienenden Halter 34 vorgesehen, wobei die Befestigung des Halters 34 an der Leiterplatte 14 in an sich üblicher Weise mittels Lappenverbindungen 35, 36 (Figur 3) erfolgt und ein Ausrichten des Halters 34 in Längsrichtung mittels der Wandelemente 27, 28, 29 und 30 erzielt wird.

Wie aus der Figur 2 hervorgeht, ist dem Träger 15 ein prismatischer Körper 37 zugeordnet, wobei dieser in den Stimwänden 38, 39 des Lichtkastens 26 gehaltert ist, und zwar derart, daß die Firstlinie 40 in Richtung des Anzeigeelementes 4 des Anzeigemoduls 25 weist. Im einzelnen sind zur Halterung des prismatischen Körpers 37 in den Stimwänden 38, 39 durch geeignete Freisparungen 41 und 42 nicht bezeichnete Auflagen ausgebildet, denen einerseits eine Nase 43 andererseits eine Klinke 44 zugeordnet sind.

Die Anordnung des prismatischen Körpers 37, der gemäß dem bevorzugten Ausführungsbeispiel v-förmig profiliert ist, wobei die Schenkel 45, 46 im wesentlichen rechtwinklig zueinander ausgebildet sind, erfolgt somit zwischen mehreren in einer Reihe auf der Leiterplatte 14 angeordneten Leuchtdioden 47 und dem Anzeigeelement 4, wobei die Innenseite des v- beziehungsweise dachförmigen Profils des prismatischen Körpers 37 den Leuchtdioden 47 zugewandt ist. Mit 48 ist eine zwischen dem Lichtkasten 26 und dem Anzeigeelement 4 vorgesehene Diffusorfolie bezeichnet.

Wie bereits erwähnt erfolgt der Zusammenbau der Frontwand-Baugruppe mittels des Halters 34, der im Bereich des Anzeigemoduls 25 beziehungsweise des Lichtkastens 26 mit Sicken 49 und 50 versehen ist sowie einen Fensterausschnitt 51 aufweist. Die Leitgummistreifen 31, 32, die die Anschlußkontakte des Anzeigeelementes 4 mit auf der Leiterplatte 14 ausgebildeten Kontakten leitend verbinden, dienen gleichzeitig als zwischen der Leiterplatte 14 und dem Halter 34 angeordnete Federn unter deren Wirkung beim Einrenken der Lappen 35 und 36, von denen lediglich zwei dargestellt sind, das Anzeigeelement sich an den Sicken 49, 50 abstützt.

Der Vollständigkeit halber sei noch darauf hingewiesen, daß die Leuchtdioden 47 durch einen Schlitz 52 in den Lichtkasten 26 eingreifen und daß die Seitenwände 53 und 54 des Lichtkastens 26 an ihrer Innenseite konkav ausgebildet sind. Außerdem ist es, um Schattenbildung zu vermeiden, zweckmäßig, die Firstlinie 40 abzurunden. Mit 55 ist eine Angußkontur bezeichnet, die außerhalb der lichtfunktionellen Flächen des prismatischen Körpers 37 angeformt ist.

## Patentansprüche

1. Anzeigemodul mit einem Träger (15) zur Aufnahme eines plattenförmigen LC-Anzeigeelementes (4), mit einer Leiterplatte (14), auf welcher im Zusammenwirken mit dem als Reflektor ausgebildeten Träger (15) der Hinterleuchtung des Anzeigeelementes dienende Leuchtdioden (47) angeordnet sind, mit Mitteln zur Kontaktierung des Anzeigeelementes mit der Leiterplatte (14) sowie mit einem den Träger, die Kontaktmittel und das Anzeigeelement umgreifenden Halter (34), welcher einen dem Anzeigeelement zugeordneten Fensterausschnitt (51) aufweist und mit Mitteln zur Verbindung mit der Leiterplatte ausgestattet ist,
**dadurch gekennzeichnet,**
**daß** innerhalb des Trägers (15) mit Abstand zu den im wesentlichen in einer Zeile angeordneten Leuchtdioden (47) und mit Abstand zu dem Anzeigeelement (4) ein lichtdurchlässiger, prismatischer Körper (37) derart angeordnet ist, daß die Firstlinie (40) des prismatischen Körpers (37) dem Anzeigeelement (4) zugeordnet ist.

2. Anzeigemodul nach Anspruch 1,
**dadurch gekennzeichnet,**
**daß** der prismatische Körper (37) einen v-förmigen Querschnitt aufweist.

3. Anzeigemodul nach Anspruch 2,
**dadurch gekennzeichnet,**
**daß** die Schenkel (45, 46) des prismatischen Körpers (37) im wesentlichen rechtwinklig zueinander ausgebildet sind.

4. Anzeigemodul nach Anspruch 1,
**dadurch gekennzeichnet,**
**daß** der prismatische Körper (37) an gegenüberliegenden Stirnwänden (38, 39) des Trägers (15) befestigt ist.

5. Anzeigemodul nach Anspruch 4,
**dadurch gekennzeichnet,**
**daß** der prismatische Körper (37) an dem Träger (15) derart befestigt ist, daß er zwischen den Stirnwänden (38, 39) des Trägers (15) verrastet ist.

6. Anzeigemodul nach Anspruch 1,
**dadurch gekennzeichnet,**
**daß** der prismatische Körper (37) aus einem durchscheinenden Material relativ hoher Opazität hergestellt ist.

7. Anzeigemodul nach Anspruch 6
**dadurch gekennzeichnet,**
**daß** der prismatische Körper (37) aus weiß eingefärbtem Kunststoff, beispielsweise Acrylglas hergestellt ist.

## Claims

1. Display module having a support (15) for holding a plate-shaped LC display element (4), having a printed circuit board (14) on which there are arranged, in cooperation with the support (15) designed as a reflector, light-emitting diodes (47) serving the backlight the display element, having means for making contact between the display element and the printed circuit board (14), and having a holder (34), which surrounds the contact means and the display element, has a window cutout assigned to the display element and is equipped with means for connection to the printed circuit board, **characterized in that** a transparent, prismatic body (37) is arranged inside the support (15) at a distance from the light-emitting diodes (47) arranged substantially in a row, and at a distance from the display element (4) in such a way that the ridge (40) of the prismatic body (37) is assigned to the display element (4).

2. Display module according to Claim 1, **characterized in that** the prismatic body (37) has a v-shaped cross section.

3. Display module according to Claim 2, **characterized in that** the limbs (45, 46) of the prismatic body (37) are constructed substantially at right angles to one another.

4. Display module according to Claim 1, **characterized in that** the prismatic body (37) is fastened on opposite end walls (38, 39) of the support (15).

5. Display module according to Claim 4, **characterized in that** the prismatic body (37) is fastened on the support (15) in such a way that it latches between the end walls (38, 39) of the support (15).

6. Display module according to Claim 1, **characterized in that** the prismatic body (37) is produced from a translucent material of relatively high opacity.

7. Display module according to Claim 6, **characterized in that** the prismatic body (37) is produced from white-pigmented plastic, for example acrylic glass.

## Revendications

1. Module d'affichage avec un support (15) pour le logement d'un élément d'affichage à cristaux liquides (4) en forme de plaque, avec une carte imprimée (14), sur laquelle sont disposées des diodes électroluminescentes (47) servant au rétroéclairage de l'élément d'affichage en interaction avec le support (15) conçu comme réflecteur, avec des moyens pour l'établissement du contact de l'élément d'affichage avec la carte imprimée (14) et avec un élément de retenue (34) enveloppant le support, les moyens de contact et l'élément d'affichage, lequel présente une ouverture de fenêtre (51) associée à l'élément d'affichage et est équipé de moyens pour la liaison avec la carte imprimée,
**caractérisé**
**en ce qu'**un corps (37) transparent et prismatique est disposé à l'intérieur du support (15) à distance des diodes électroluminescentes (47) disposées sensiblement sur une ligne et à distance de l'élément d'affichage (4) de telle sorte que la ligne de sommet (40) du corps (37) prismatique soit associée à l'élément d'affichage (4).

2. Module d'affichage selon la revendication 1, **caractérisé en ce que** le corps (37) prismatique présente une section en forme de V.

3. Module d'affichage selon la revendication 2, **caractérisé en ce que** les branches (45, 46) du corps (37) prismatique sont conçues sensiblement de façon perpendiculaire entre elles.

4. Module d'affichage selon la revendication 1, caractérisé en cé que le corps (37) prismatique est fixé sur des parois frontales (38, 39) opposées du support (15).

5. Module d'affichage selon la revendication 4, **caractérisé en ce que** le corps (37) prismatique est fixé sur le support (15) de telle sorte qu'il soit verrouillé entre les parois frontales (38, 39) du support (15).

6. Module d'affichage selon la revendication 1, **caractérisé en ce que** le corps (37) prismatique est fabriqué à base d'un matériau translucide d'opacité relativement élevée.

7. Module d'affichage selon la revendication 6, **caractérisé en ce que** le corps (37) prismatique est fabriqué à base de plastique teinté en blanc, par exemple du verre acrylique.
